# EUROPEAN PATENT APPLICATION

(11) **EP 4 190 158 A1**
(43) Date of publication of application: **07.06.2023**
(21) Application number: 21831580.2
(22) Date of filing: 22.06.2021
(51) Int. Cl.: A22C 17/00, A22C 17/02

(54) **DEBONING DEVICE**

(30) Priority: 30.06.2020 JP 2020113344
(71) Applicant: Sato, Kazuo, Hokkaido 084-0909 (JP)
(72) Inventor: Sato, Kazuo, Hokkaido 084-0909 (JP)
(74) Representative: Grünecker Patent- und Rechtsanwälte PartG mbB
(86) International application number: PCT/JP2021/023604
(87) International publication number: WO 2022/004488

(57) **Abstract**

[Problem] To provide a deboning device that can reliably form notches in ribs at set intervals, prevent a degradation in the yield of bone pulling, and improve work efficiency. [Solution] The deboning device has a cueing hand 25 which has, on a robot arm 4 in which a plurality of joints connected by different rotary shafts are three-dimensionally controlled, a blade part 27 that cuts and removes meat on the outer periphery of rib tip sections in order to expose the tip sections of the ribs R attached to block meat of a cow, a pig, a sheep, or the like.

## Description

### [Overview]

### [Problem to be solved]

To provide a deboning device that can reliably put notches at preset intervals, prevent deterioration in yield and improve working efficiency.

### [Solution]

A deboning device includes a cutting hand 25 with a blade part for cutting and removing outer peripheral flesh from a rib tip part so as to expose a tip of each rib R in a robot arm 4 of which multiple joints are coupled by different rotation shafts and controlled to operate in a three-dimensional manner.

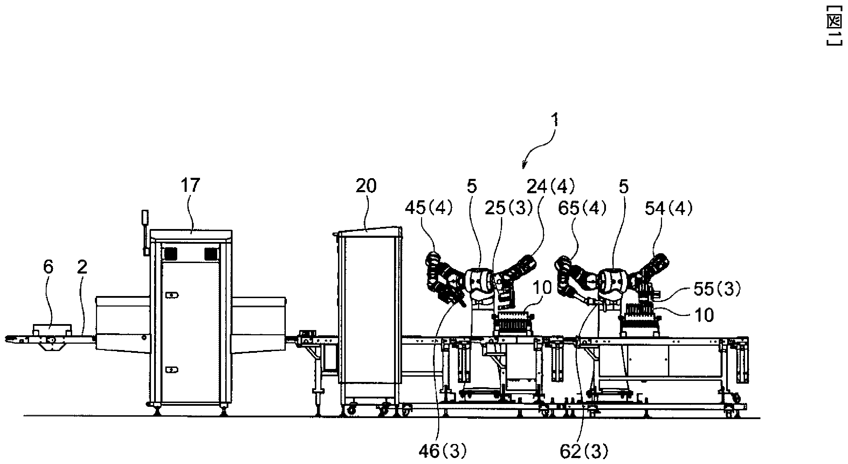

[Selected drawing] Figure 1

### [Detailed description of the invention]

### [Technical field]

The present invention relates to a meat processing apparatus and, more particularly, to a debiting apparatus which removes ribs from block meat such as cattle, pigs and sheep.

### [Background of the Invention]

Conventionally, as one of processing apparatuses for meat animals, a deboning device for removing ribs from a block meat of a slaughtered animal such as a cow, a pig or a sheep has been used.

As such a conventional deboning device, a thickness, a width of a rib adhered to a block meat prepared, and a distance between the ribs are meatured, A robot arm is operated on the basis of the measured data so a gap is provided on both sides of each rib by two cutters which are arranged to freely expand and contract by a spring at the tip of the robot arm. Then, a rib peeling unit which is constituted by a nylon pull thread between two side plates provided with predetermined interval arranged on other robot arm is hooked on an end part of each rib and slid to the other end side. The rib peeling unit is advanced along an incision so that ribs are peeled from the meat (see Patent document 1).

However, in the aforementioned conventional decurler, since two cutters which cut both sides of each rib of various thicknesses, the interval is arranged to be freely extended by a spring. To solve the problem that an interval of each cutter is excessively widened when a block meat is brought into contact with one cutter or the cutting line is bent, thereby the yield is deterriorated..

As an attempt to overcome such problems, the present inventor has developed a deboning device which can reliably cut along both sides of each rib without deterioration in yield and improve working efficiency (see Patent Document 2).

### [Prior art reference]

### [Patent document]

[Patent document 1]JP 2010-263830A
[Patent document 2]JP 2016-135125A

### [Summary of the invention]

### [Problem to be solved by the invention]

However, in the aforementioned Patent document 2, since the wire is hooked under each rib without exposing the end portion of each rib, it is not possible to hook the wire smoothly under the rib and it is prevented that an automation rate of the deboned work is improved. Alternatively, it has been necessary to expose an end of each rib manually, thereby preventing an increase in an automation rate.

The object of the present invention is to provide a deboning device improving an automation rate of a deboning work by efficiently performing a bone pulling of each rib and improving a working efficiency.

### [Means for solving the problem]

To achieve the above object, the deboning device according to the present invention comprises a belt conveyor carrying and transporting a processed block meat of a meat animal, at least one creasing arm arranged on a robot arm which is three dimensionally controlled by a plurality of joints connected by different rotation axes, and the creasing arm is provided with a scoring hand for notching both sides of each rib adhered to the block meat conveyed by the belt conveyor, a rib detecting device generating three dimensional data of block meat conveyed on the belt conveyor and detecting the position coordinates, the number and the shape of each rib adhering to the block meat based on the three dimensional data, a control device creating a control table based on information of a rib detected by the rib detection device and controling drive of each part of the deboning device, characterized in that a head exposing hand is located at a robot arm which is three dimensionally controlled by a plurality of joints connected by different rotation axes and the head exposing hand has a blade portion which cuts off a meat of an outer circumference of a rib tip portion to expose a tip portion of each rib.

With this configuration, it is possible to expose the distal end of each rib and allow the wire to pass easily under the rib.

According to another aspect of the present invention, the deboning device according to the present invention further comprises a pressing mechanism for holding the block meat when the processing is performed by each of the hands to the block meat conveyed by the belt conveyor.

With this configuration, it is possible to hold the block meat in the predetermined position in order to prevent the block meat from floating so the process for the block meat is performed.

According to another aspect of the present invention, the deboning device according to the present invention further comprises a bone pulling arm provided on a robot arm which is three dimensionally controlled by a plurality of joints connected by different rotation axes, which bone pulling arm having a bone pulling hand that cuts off the meat at the outer periphery of the rib part by the head cutting hand and passes the wire along each rib of the block meat cut by the cutting hand so peels the rib from the block meat.

With this configuration, the ribs can be peeled from the block meat by the wires.

According to a further aspect of the present invention, the deboning device according to the present invention, wherein the blade portion provided in the cutting hand is a cylindrical or partially cylindrical portion having a single blade or double blades at a tip portion thereof, and the blade portion is arranged so as to move forward and backward in an axial direction.

With this configuration, the blade portion is advanced in an axial direction so that it is possible to cut and remove the meat of the outer periphery of the rib portion.

According to a further aspect of the present invention, the deboning device according to the present invention, wherein the blade portion provided in the cutting hand is a cylindrical or partially cylindrical portion having a single blade or double blades at a tip portion thereof and the blade portion is arranged to swing at a predetermined angle.

With this configuration, it is possible to cut and remove the meat at the outer periphery of the rib portion due to the swing of the blade portion.

According to another aspect of the present invention, the deboning device according to the present invention, wherein the blade portion provided in the cutting hand has a cylindrical shape with a inner blade portion of single blade or double blades at a rib tip portion thereof, and the blade portion is rotationally driven about a central axis of a cylindrical shape.

With this configuration, it is possible to cut and remove the meat at the outer periphery of the rib tip portion by the rotation of the blade portion.

According to another aspect of the present invention, the deboning device according to the present invention, wherein the cutting hand has at least one cutting edge of single blade or double blades.

With this configuration, it is possible to form a cutted portion along the rib on both sides of the rib by the half circular shape of the cutting hand and the blade portion of the one or double blades.

According to another aspect of the present invention, the deboning device according to the present invention, wherein the cutting hand has at least one cutting edge of straight single blade or double blades.

With this configuration, it is possible to form a cutted portion along the rib on both sides of the rib by the straight line of the cutting hand and the blade portion of the one or double blades.

According to another aspect of the present invention, the deboning device according to the present invention, wherein the cutting hand has at least one cutting edge with a tip and the cutting edge has one or double blades.

With this configuration, it is possible to form a cutted portion along the rib on both sides of the rib by the cutting edge having a tip.

According to another aspect of the present invention, the debone device according to the present invention, wherein each of the cutting edge is driven to vibrate minutely.

With this configuration, it is possible to form the cutted portion favorably by fine vibration of the cutting edge.

According to another aspect of the present invention, the deboning device according to the present invention, wherein two blades are provided on the creasing arm.

With this configuration, two cutted portions can be efficiently formed along the ribs on both sides of the rib by simultaneously driving the two blades of the cutting arm.

According to another aspect of the present invention, the deboning device according to the present invention, wherein the distance of the two blades of the cutting arm are adjusted in accordance with the rib information detected by the rib detecting device.

With this configuration, since the distance of the two blades of the cutting arm is adjusted in accordance with the rib information, two cutted portions formed by the two blades can be placed in the vicinity of the rib, thereby the recovery efficiency of meat can be improved.

According to another aspect of the present invention, the deboning device according to the present invention, wherein the rib detecting device is constitued of an X-ray measuring device and a three dimensional measuring device, and the direction of the X-ray generator is set so that an irradiation direction of an X-ray from an X-ray generator of the X-ray measuring device is irradiated in an oblique direction different from a vertically downward direction.

With this configuration, it is possible to radiograph satisfactorily the whole area of the block meat without the X-ray being obstructed by the backbone of the block meat.

According to another aspect of this invention, the deboning device according to the present invention, further comprises a wire hooking tongue which is driven to be interposed between the wire and the lower part of the rib so as to introduce the wire of the bone pulling arm below the rib.

With this configuration, the wire hooking hook is interposed between the wire and the lower portion of the rib so that the wire can be introduced stably below the rib.

According to another aspect of the present invention, the deboning device according to the present invention, wherein each of the arms is connected to a plurality of robots which are three dimensionally controlled according to a processing time.

With such a configuration, each arm can be connected to a different robot, and each arm can be driven efficiently to deboned.

A further feature of the present invention, the deboning device according to the present invention, wherein at least one robot arm is provided and each of the robot arm carries out the processing. With such a configuration, it is possible to realize a compact configuration by providing one robot arm for each process, and to perform efficiently a deboning process by providing two robot arms for each process.

### [Effect of the Invention]

According to the deboning device of the present invention, it is possible to improve the automation rate, save labor, and reliably perform deboned treatment.

### [Brief Description of the Drawings]

[FIG. 1]An overall front view showing an embodiment of a deboning device according to the present invention
[FIG. 2]The plan view of FIG. 1
[FIG. 3]The perspective view of FIG. 1
[FIG. 4]An explanatory diagram showing an irradiation direction of an X-ray measurement apparatus according to the present embodiment, wherein (A) is an explanatory diagram of a case where vertical irradiation is shown, (B) is an explanatory diagram of a case where oblique irradiation is shown, and (C) is a longitudinal sectional view of a specific embodiment of an X-ray measurement apparatus
[FIG. 5]An perspective view showing a head holding hand in the present embodiment, wherein (A) is a perspective view from an oblique front side and (B) is a perspective view from an oblique rear side
[FIG. 6]An perspective view showing another head holding hand in the present embodiment, wherein (A) is a perspective view from an oblique front side, (B) is a perspective view from an oblique rear side and (C) is an oblique view
[FIG. 7]A perspective view of the pressing mechanism of the present embodiment, wherein (A)is a perspective view from an obliquely front side and (B) is a plan view
[FIG. 8]A view of an incising arm of the present embodiment, wherein (A) is a perspective view, (B) is a front view and (C)is a right side view
[FIG. 9]A perspective view of the bone pulling arm of the present embodiment, wherein (A)is a perspective view from a left front side and (B) is a perspective view from a right front side
[FIG. 10]A perspective view of a wire pressing arm

### [Mode for carrying out the invention]

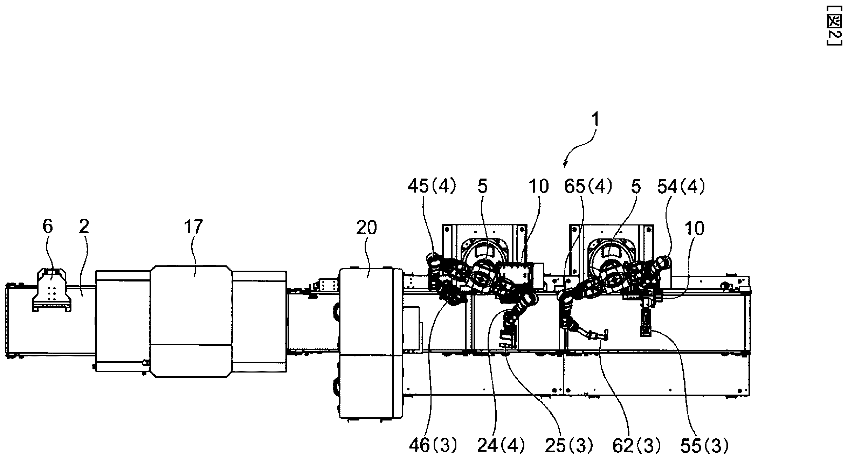

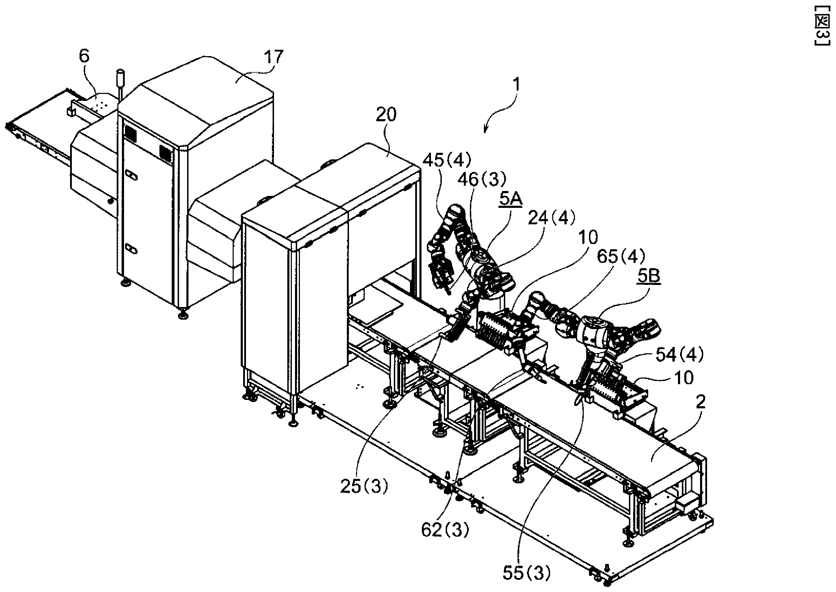

As shown in FIG. 1 to FIG. 3, the deboning device 1 according to the present embodiment includes a belt conveyor 2 which carries a block meat M which has been cut into a predetermined width, and a plurality of work hands 3, 3 which perform deboning treatment of each rib with respect to the block meat M conveyed by the belt conveyor 2. A known pressing mechanism 10, 10 for holding the block meat M conveyed by the belt conveyor 2 during the deboning operation is arranged along the belt conveyor 2. In this embodiment, each of the work hands 3 is disposed on a robot arm 4 disposed at a predetermined interval along the belt conveyor 2. Each of the robot arms 4 is provided at a top of an industrial robot 5 in which a plurality of joints connected by different rotation axes which are three dimensionally controlled.

A incising arm 45 and a head exposing arm 24, which will be described later, are supported on an industrial robot 5A positioned upstream of the belt conveyor 2, and a wire holding arm 65 and a bone pulling arm 54, which will be described later, are supported on an industrial robot 5B located downstream of the belt conveyor 2. The incising arm 45, the head exposing arm 24, the wire holding arm 65 and the bone pulling arm 54 are named the robot arm 4 generically.

An incising hand 46 is provided at a tip of the incising arm 45, and a head exposing hand 25 is provided at a tip of the head exposing arm 24. A wire holding hand 62 is provided at a tip of the wire holding arm 65, and a bone pulling hand 55 is provided at a tip of the bone pulling arm 54.

The incising hand 46, the cueing hand 25, the wire holding hand 62 and the bone pulling hand 55 will be collectively referred to as a working hand 3.

Further, in the deboning device 1 of the present embodiment, a meat positioning guide 6 for positioning the block meat M from the side is disposed on the most upstream side in the transport direction of the block meat M and is arranged so as to be movable back and forth between a position where the block meat M is guided and a position where the block meat M is not guided.

An X-ray measuring device 17 is disposed on the belt conveyor 2 downstream of the meat positioning guide 6 to measure the conveyed block meat M by an X-ray. The X-ray measuring apparatus 17 measures an X-ray dose which has passed through the block meat M by an X-ray line sensor camera 19. Accordingly, the X-ray image of the block meat M is acquired by the X-ray line sensor camera 19 in a state where the belt conveyor 2 conveys the block meat M placed thereon at a constant speed. Further, on the downstream side of the X-ray measuring device 17, a three dimensional measuring device 20 for creating three dimensional data of the block meat M is disposed on the belt conveyor 2.

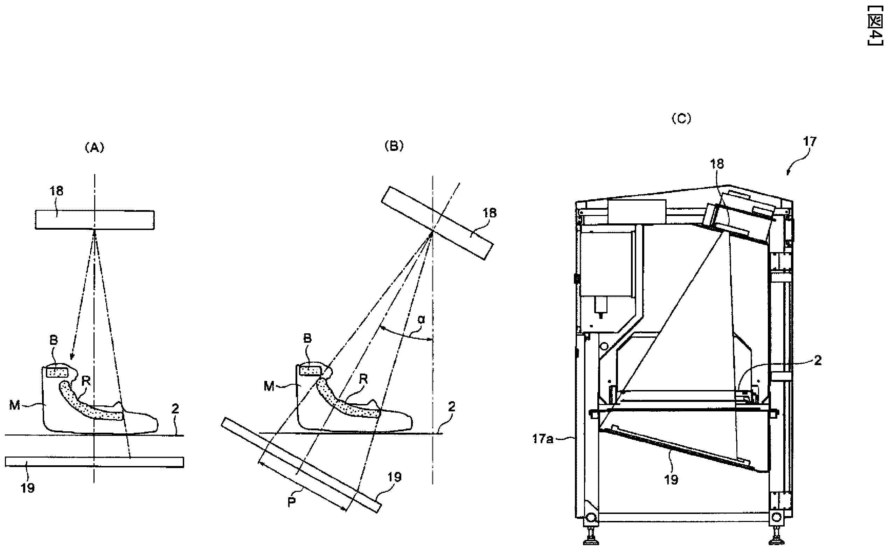

As shown in FIGS. 4A and 4B, a X-ray producing apparatus 18 is configured to detect a rib R by radiating X-rays from an X-ray generator. FIG. 4A shows an unfavorable configuration and as shown in FIG. 4B, an X-ray receiver such as an X-ray line sensor camera 19, which is arranged at an angle with respect to the horizontal direction and projects X-rays from this X-ray generator 18, is arranged parallel to said X-ray generator 18. As shown in FIG. 4A, X-ray is irradiated from the vertical direction toward right under the X-ray generator 18 by obliquely arranging the X-ray generator 1, and when X-rays are irradiated from the vertical direction to the right side, the X-ray is irradiated onto the spine B of the block flesh M, so that each rib R of the block flesh M cannot be accurately detected. Also, when the X-ray from the X-ray generator 18 is irradiated in the oblique direction rather than in the vertical direction, if the X-ray irradiation inclination angle a is too large, a part of the X-ray reaches the periphery of the block meat M, so that each rib R of the block meat M cannot be accurately detected. Therefore, it is preferable to set an irradiation inclination angle α from a vertical direction in a range of 5 degree to 45 degree. Then, rib projection can be accurately performed as shown in FIG. 4B. It should be noted that the irradiation direction of the X-war does not necessarily need to be vertically lower, and the position of the X-ray generator 18 and the X-ray line sensor camera 19 may be changed so long as the position of the X-ray generator 1 and the position of the X-ray line sensor camera 3 are maintained in an oblique direction with respect to the block flesh M while maintaining the relative positional relationship.

Specifically, as shown in FIG. 4C, the X-ray measuring apparatus 17 is configured to pass a belt conveyor 2 which conveys a block meat into the casing 17 a. An X-ray generator 18 is obliquely disposed at an upper portion of the belt conveyor 2 so as to radiate X-rays from the X-ray generator 18 in an oblique direction. An X-ray line sensor camera 19 to which X-rays from the X-ray generator 18 are projected is arranged in parallel to the X-ray generator 18 at an obliquely lower position of the belt conveyor 2.

A 3-D measuring device 20 is provided on a belt conveyor 2 downstream of the X-ray measuring device 17. The 3-D measuring device 20 includes two sets of two color CCD cameras (not shown), and photographs the rib R of the block meat M.

Data from the X-ray measurement apparatus 17 and the 3-D measuring device 20 are shown in FIG. 4A control unit (not shown) for controlling the entire deboning device 1 is output to a control unit (not shown), and 3-D data of the block meat M, i.e., the position, shape, and number data of each rib R in the block meat M are generated, and the operation of the robot arm 4 is controlled by the control unit. As a result, image measurement accuracy is improved and stabilized. In addition, it is possible to detect abnormalities such as adhesions, malformations, and fractures of the ribs R, R and eliminate the block meat M.

On the belt conveyor 2 on the downstream side of the 3-D measuring device 20, a head exposing hand 25 having a blade part 27 is provided for cutting and removing the outer periphery of the tip of the rib R in order to expose the leading end of each rib R.

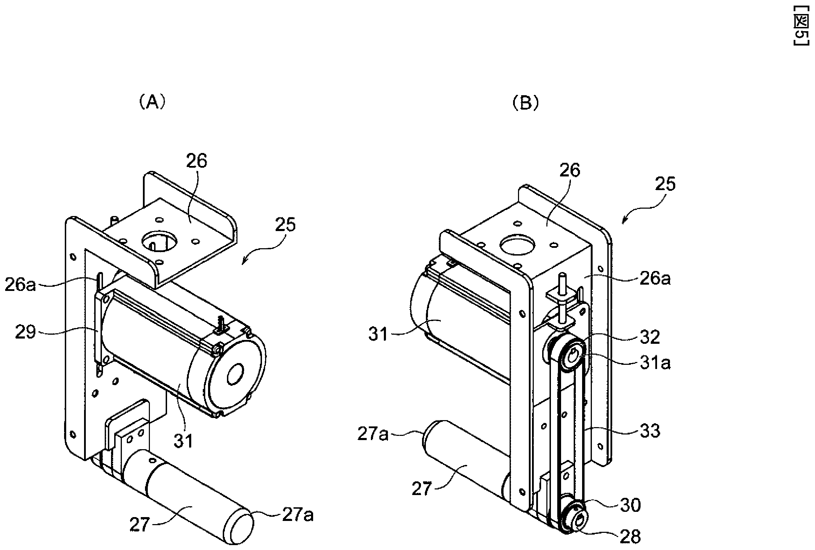

As shown in detail in FIGS. 5A and 5B, the head exposing hand 24 has an inverted L-shaped base portion 26 which is vertically provided on a vertical portion of the head exposing arm 24, and a cylindrical blade portion 27 which extends in a horizontal direction is provided at a lower end portion of the vertical base portion 26a of the base portion 26. In addition, a rotation shaft 28 extending backward is provided at a proximal end portion of the cylindrical blade portion 27, and the rotation shaft 28 is supported by a vertical base portion 26a of the base portion 26 via a bearing (not shown) so as to be rotatable in one direction. In addition, a body 27a of the blade portion 27 is formed as a double blades or a single blade formed at the tip end portion of the blade portion 27 which is cylindrical.

A rotating shaft 28 of the cylindrical blade portion 27 reaches a back part of the base portion 26 and a pulley 30 is fitted on the rear part of the rotating shaft 28.

On the other hand, an electric actuator 31 is provided at an upper end portion of a vertical portion 26a of the base portion 26, and an output shaft 31a of the electric actuator 31 passes through a bearing formed in a vertical base portion 26a of the base portion 26 and reaches a back portion of the vertical portion 26a. A pulley 32 located directly above a pulley 30 of the rotation shaft 28 of the blade portion 27 is fitted to the output shaft 31a. A flat belt 33 is wound on the pulleys 30 and 32 so as to interlock with the pulleys 30 and 32, and the blade portion 27 is rotated by the rotation of an output shaft 31a of the electric actuator 31. Instead of the cylindrical blade 27, another blade may be used.

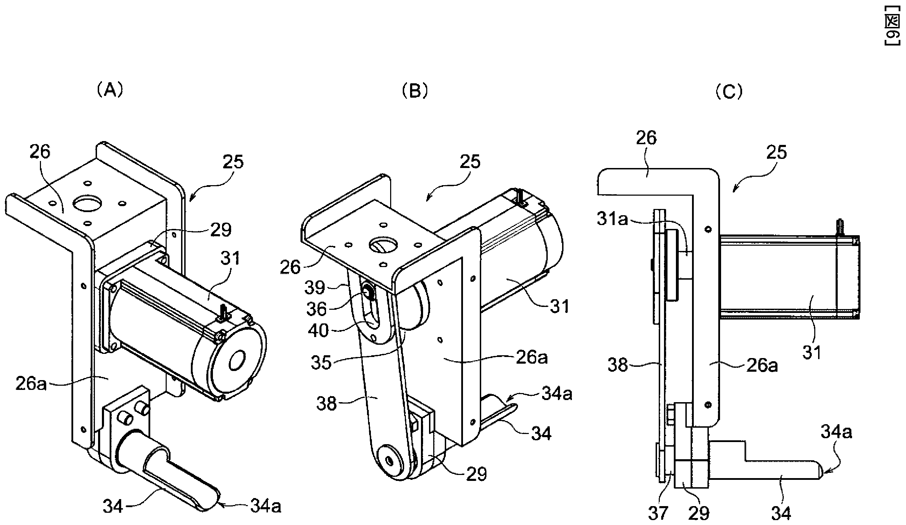

FIGS. 6A, B, and C show the aforementioned other blade portions 34 and, and the blade portion 34 has a semi-cylindrical shape in which an upper half of the blade portion 34 in the axial direction in the axial direction of the blade portion 6 is removed from the axial direction in the axial direction of the blade portion 2/3. A single blade or double blade portion body 34a is formed at a tip portion of the semi-cylindrical shape.

On the other hand, an electric actuator 31 is provided at an upper end portion of a vertical portion 26a of the base portion 26, and an output shaft 31a of the electric actuator 31 passes through a bearing formed in a vertical base portion 26a of the base portion 26 and reaches a back portion of the vertical portion 26a. An axial center of a rotary disk 35 is connected to the vetical portion 26 a at the back of the output shaft 31a, and an eccentric pin 36 is provided at a circumferential portion of the rotating disk 35.

On the other hand, a support shaft 37 of the blade portion 34 passes through a bearing 29 of the base portion 26 and reaches a back portion of the base portion 26, and a swing link 38 which swings left and right around a lower end portion, is fitted on the support shaft 37 at the back portion. A fitting member 39 having an elongated hole 40 extending substantially in the vertical direction is attached to an upper end portion of the swing link 38. The eccentric pin 36 of the rotating disk 35 is slidably fitted in the elongated hole 40 of the fitting member 39.

Accordingly, the rotating disk 35 is driven to rotate by driving the electric actuator 31 and as a result, the eccentric pin 36 provided on the rotating disk 35 revolves synchronously. As a result, the eccentric pin 36 moves substantially vertically in the elongated hole 40 so that the swing link 38 swings left and right around the support shaft 37 at the lower end by the lever crank mechanism. As a result, the blade portion 34 repeatedly rotates in the forward and backward directions by a predetermined angle.

In this way, a semicircular shape in which an upper half in a range of about 2/3 of a tip end side of an axial direction of the blade portion 34 is a semicircular shape because it may be cut into a rib R of a block meat M when a circular blade is used so a semicircular shape is formed to make a clearance.

Referring back to FIG. 1, when the head exposing hand 25 is driven to expose the leading end of the rib R of the block meat M, a pressing mechanism 10 for pressing and holding a block meat M while performing an operation for cutting and removing the outer periphery of the tip of the rib R is arranged on the side of the head exposing hand 25 so as to advance and retreat in the lateral direction from the side of the belt conveyor 2 in the direction of travel.

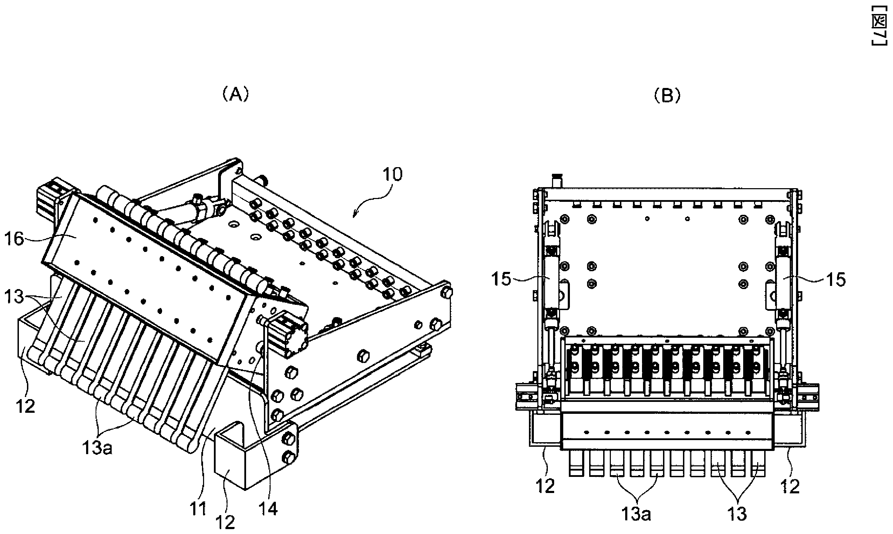

As shown in FIGS. 7A and 7B, a base portion 11 extending in the longitudinal direction of the meat pressing mechanism 10 approaches the block meat M being conveyed from a lateral direction, and a pair of side plates 12,12 perform positioning in the conveying direction with respect to the block meat M. Further, a plurality of upper pressing members 13, 13 serving as an upper pressing member for pressing the block meat M from the back of the block meat M and pressing the block meat M from above are mounted at intervals in the conveying direction.

A casing 16 of the meat pressing mechanism 10 is disposed so as to be rotatable about a horizontal shaft 14. Further, each end of a pair of pneumatic cylinders 15,15 is attached to the casing 16, and the casing 16 is rotated by supplying air pressure to the pneumatic cylinder 15. A plurality of the upper pressing members 13,13 each is provided with a pressing part 13a in the form of a hook and the block weight M are lowered in accordance with the rotation of the casing 16. The pressing portion 13a is brought into contact with the upper surface of the block meat M and in this state, the fixing mechanism of the meat pressing mechanism 10 is driven to hold the block meat M from above. Further, when the casing 16 is rotated in the opposite direction, the plurality of upper pressing members 13 can take a totally retracted position to totally retract.].

Referring back to FIG. 1, a creasing arm 45 is supported on the side of the head exposing hand 25 on the upstream side of the belt conveyor 2, and is provided with a creasing hand 46 which cuts the side of each rib R of the block meat M.

In the present embodiment, the head exposing hand 25 and the creasing hand 46 are arranged in such a manner that the creasing arm 46 is positioned upstream of the head exposing hand 25 in the conveying direction of the block meat M. It is also possible to position the hean exposing hand 25 on an upstream side of the creasing arm 46, remove the meat on the end surface so as to expose an end portion of each rib R, and then cut along both sides of each rib R.

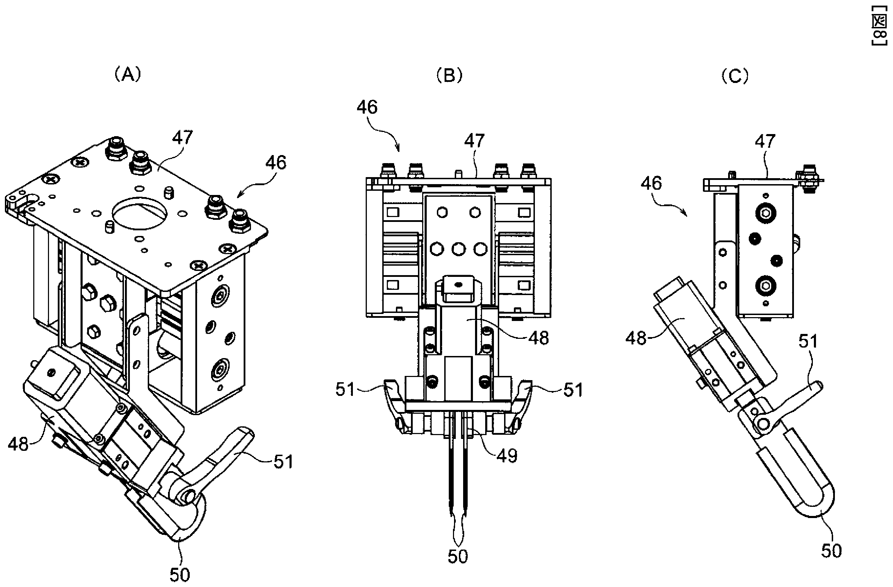

As shown in FIGS. 8A, B and C, the creasing hand 46 arranged on the creasing arm 45 mainly has a base portion 47 to which the cutting arm 45 of the industrial robot 5 is connected, and an electric actuator 48 comprising a servo motor is provided on the base portion 47.

A blade attaching portion 49 is formed below the electric actuator 48 to mount two blades 50,50 in parallel with an interval. Two levers 51 51 which are rotated so as to be able to assume a state in which the two blades 50 are individually restrained and a state in which the two blades 50 are opened are arranged in the blade attaching portion 49. Each of the blades 50 has a sharp semicircular tip and can easily cut the block meat M.

Further, the two blades 50 are controlled so as to open and close the mutual interval according to the shape of the rib R by driving the electric actuator 48. For this purpose, a conversion mechanism (not shown), such as a rack, a pinion and a bevel gear, is arranged for converting the drive of the electric actuator 48 into a lateral movement of the two blades 50. It is to be noted that both the blades 50 are formed so as to be minutely vibrated by a mechanism (not shown), so that the block meat M can be easily cut even by microvibration of the blades 50 themselves.

According to the creasing hand 46 configured as described above, the position of each of the blades 50 is controlled by the driving of the electric actuator 48 so as to be along the rib R based on the position, the shape, and the number data of each rib R in the block meat M from the X-ray measuring device 17 and the 3-D measuring device 20. Since it is possible to perform the scoring while vibrating both of the blades 50 it is possible to surely cut a notch on both sides of each rib R in accordance with differences in the thickness and shape of each rib R and differences due to individual differences, thereby improving working efficiency.

It is also possible to provide only one blade 50 on the creasing hand 46 of the creasing arm 45, and to perform the scoring operation for two times by cutting every one side of the rib R.

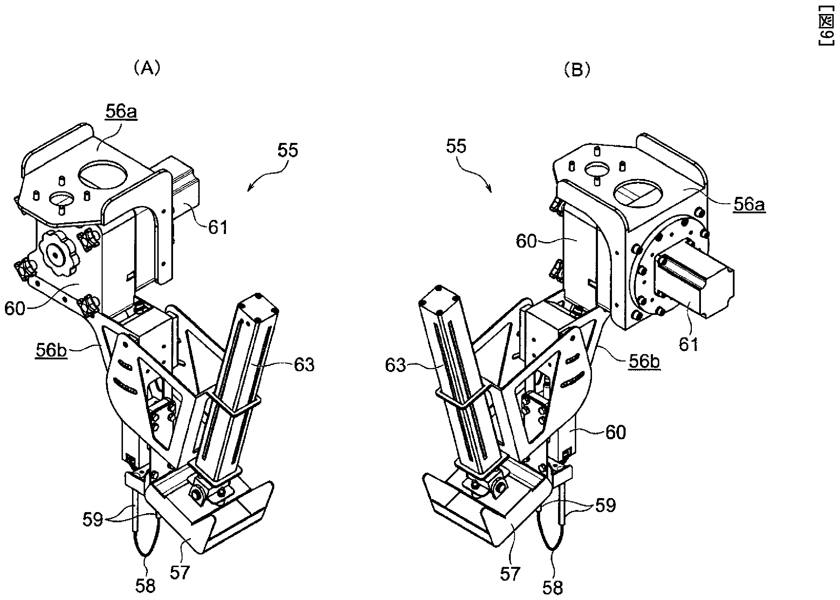

FIG. 9 shows in detail the belt conveyor 2 downstream of the creasing arm 45. A bone pulling hand 55 for pulling up each rib R of the block meat M from an end is provided. The second base portion 55b of the bone pulling hand 56 is disposed below the first base portion 56a of the bone pulling hand 56. A plate like pressing head 57 which can move up and down is provided on the second base portion 56b of the bone pulling hand 56, and a piston rod (not shown) of an air cylinder 63 is connected to the pressing head 57 and the pressing head 57 is raised and lowered by supplying air to the air cylinder 63. In addition, in the vicinity of the pressing head 57, the second base portion 56 b is provided with a pair of guide members 59,59 extending from the lower end of the pipe-shaped guide member 58 so as to form a U-shaped intermediate portion of the bone-pulling wire. The wire 58 is wound around a reel 60 fixed to the first base portion 56 a, and the reel 60 is wound out by an electric actuator 61.

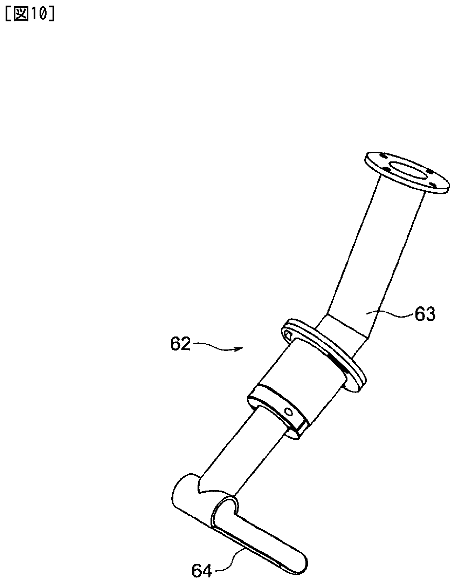

On the other hand, as shown in FIG. 1, a wire holding hand 62 which cooperates with the bone pulling hand 55 is disposed in the vicinity of the bone pulling hand 55. The wire holding hand 62 is for positioning the wire 58 under the rib R to perform bone pulling. Therefore, as shown in FIG. 10, the wire holding hand 62 has a base 63 and a semi-circular tongue 64 projecting laterally, and the tongue 64 is advanced and retreated by the wire holding arm 65. Then, the wire holding hand 62 catches the wire 58 and introduces it under the rib R.

Next, an operation of the deboning device of the present embodiment having the above-described configuration will be described.

First, a block meat M which has been cut into a predetermined width in advance and is removed from the end of each rib R is placed on the most upstream portion of the belt conveyor 2 (left in FIG. 1). Then, the meat positioning guide 6 advances to press against the back side of the block meat M to position the block meat M.

Then, the belt conveyor 2 is driven to convey the block meat M to an X-ray measuring device 17 arranged upstream of the industrial robot 5. Then, in a state in which the X-ray measuring device 17 is driven at a constant speed and the block meat M is conveyed at a constant speed, the X-ray line sensor camera 19 which is an X-ray receiver measures an X-ray dose that has passed through the block meat M from the X-ray generator 18, and transmits this data to a control device (not shown) of the X-ray detector 2. Further, the block meat M photographed by the X-ray measuring device 17 is conveyed to a position facing the downstream 3-D measuring device 20 and stopped. Then, a block meat M is photographed by each camera (not shown) of the 3-D measuring device 20, and this photographing data is also transmitted to the control device.

Then, the control device creates three dimensional data such as the meat of the block meat M and the ribs R by the X-ray measuring apparatus 17 and the 3-D measuring apparatus 20. After that, the control table for the belt conveyor 2, each industrial robot 5, each working hand 3 and each of the meat pressing mechanisms 10 is created by this data, and the respective drive control is performed.

The block meat M is detected data of each rib R by the X-ray measuring apparatus 17 and the 3-D measuring apparatus 20 and on the basis of a control table created by the control unit (not shown), a predetermined amount of the belt conveyor 2 is driven so as to be positioned for the block meat M in front of the pressing mechanism 10 disposed in the vicinity of the industrial robot 5.

Then, with respect to the block meat M conveyed, the meat pressing mechanism 10 moves forward by driving a pneumatic cylinder (not shown) to horizontally position the block meat M. After that, the pneumatic cylinder 15 is driven and as shown in FIG. 7, the casing 16 is rotated, and the block meat M is pressed against the back side of the block meat M in advance from the state in which the upper pressing members 13 are raised in advance.

Thereafter, based on the positional coordinates, number and shape of each rib R attached to the block meat M which has been detected by the X-ray measuring apparatus 17 and the 3-D measuring apparatus 20 with the three dimensional shape, the industrial robot 5 (the creasing arm 45) and the creasing hand 46 are driven by the control device to perform a cutting operation on both sides of each rib R.

In this cutting operation, the two blades 50 of the creasing hand 46 shown in FIG. 8 are opposed to each other so that the rib R at one end of the block meat M is positioned between the rib R and the block meat M is cut along the rib R in accordance with the thickness of the rib R while finely vibrating each of the blades 50. When cutting of the block meat M is completed along both sides of the one rib R in this way, cuts are made in the block meat M along both sides of the next rib R. The direction in which the cut is made may be always from one direction or from both directions as a reciprocating motion. When a cut is made along both sides of all of the ribs R in this manner, the industrial robot 5 (the creasing arm 45) is operated to retract the cutting hand 46.

When cuts are made along both sides of all of the ribs R by the aforementioned steps, the head of the ends of each rib R is exposed. In this case, the electric actuator 31 of the head exposing hand 25 shown in FIG. 5 drives rotated cylindrrical blade portion 27 toward the rib R and the blade portion 27 is brought into contact with the end of the rib R, and the rib R is cut and removed from the rib R. After cutting the end portion of the meat of the periphery of the rib R, the end portion of the meat of the outer periphery of the next rib R is cutted as the same work. After this operation is repeated and the meat at the outer periphery of the leading end of all of the ribs R is removed, the industrial robot 5 is operated to retract the head 25.

Next, the belt conveyor 2 is driven to move the block meat M which has been cut along both sides of each rib R to a position facing the bone pulling hand 55 and the wire holding hand 62. Then, the block meat M is held by driving the meat pressing mechanism 10 with respect to the block meat M.

In this state, the wire holding hand 62 is driven to be hooked on the wire 58 of the bone pulling hand 55 and guided under the rib R at the end of the block meat M. Then, after the bone pulling hand 55 is raised once to confirm that the wire 58 is hooked on the rib R, the pressing head 57 is lowered to press the block meat M. At this time, the surplus wire 58 is wound on the reel 60. Thereafter, the wire holding hand 62 is retreated, and in this state, the reel 60 is rotated to wind up the wire 58, and the pressing head 57 is raised to peel off the rib R from the meat portion. This operation is performed on each of the other ribs R, and the entire ribs R is peeled from the portion of the meat, and the operation is completed.

As described above, according to the deboning device of the present embodiment, it is possible to perform the creasing and the bone pulling in a state where the block meat M is securely held, so that it is possible to prevent the deterioration of the yield without scraping off the extra meat and to improve the working efficiency.

Note that the present inventions are not limited to the above-described embodiment, and various modifications can be made if necessary.

For example, in the embodiment described above, the X-ray dose of the block meat transmitted from the X-ray generator by the X-ray measuring device is measured by the X-ray line sensor camera 19 as an X-ray receiver while the block meat is driven at a constant speed on the belt conveyer. In the present invention, an X-ray dose may be measured by a device other than an X-ray line sensor camera. In this case, the belt conveyor may be stopped or run.

In addition, in the above-described embodiment, a deboned work is performed using two double-arm industry robots. But a plurality of single-arm articulated robots may be used to perform the deboning work.

Further, the arrangement of the X-ray generator is not limited only to the upper portion of the belt conveyor, and various positions are possible as long as the position of the block meat can be photographed.

Further, as the pressing mechanism for pressing the block meat during work on the block meat, it is possible to press the block meat from the both sides of the block meat or to fix the block meat by inserting a pin into the block meat and various means can be adopted.

### [Explanation of letters or numerals]

- 1: deboning device
- 2: belt conveyor
- 3: working hand
- 4: robot arm
- 5, 5a, 5b: industrial robot
- 6: meat positioning guide
- 10: meat pressing mechanism
- 11: base
- 12: side board
- 13: upper pressing member
- 14: horizontal axis
- 15: pneumatic cylinder
- 16: casing for meat pressing mechanism
- 17: x-ray measuring device
- 17a: housing of x-ray measuring device
- 18: x-ray generator
- 19: x-ray line sensor camera
- 20: 3-D measuring device
- 24: head exposing arm
- 25: head exposing hand
- 26: base portion
- 27: blade portion
- 28: rotation shaft
- 30: pulley
- 31: electric actuator
- 32: pulley
- 33: flat belt
- 34: cutting part
- 35: rotating disc
- 36: eccentric pin
- 38: swing link
- 39: fitting member
- 40: slot
- 45: creasing arm
- 46: creasing hand
- 47: base portion
- 48: electric actuator
- 49: blade attaching portion
- 50: blade
- 54: bone length arm
- 55: bone pulling hand
- 56a: first base portion
- 56b: second base portion
- 57: pressing head
- 58: pulling wire
- 59: guide member
- 60: reel
- 61: electric actuator
- 62: wire holding hand
- 63: base
- 64: tongue

## Claims

1. Deboning device includes a belt conveyor carrying and transporting a processed block meat of a meat animal, at least one creasing arm arranged on a robot arm which is three dimensionally controlled by a plurality of joints connected by different rotation axes, and the creasing arm is provided with a scoring hand for notching both sides of each rib adhered to the block meat conveyed by the belt conveyor, a rib detecting device generating three dimensional data of block meat conveyed on the belt conveyor and detecting the position coordinates, the number and the shape of each rib adhering to the block meat based on the three dimensional data, a control device creating a control table based on information of a rib detected by the rib detection device and controling drive of each part of the deboning device, **characterized in that** a head exposing hand is located at a robot arm which is three dimensionally controlled by a plurality of joints connected by different rotation axes and the head exposing hand has a blade portion which cuts off a meat of an outer circumference of a rib tip portion to expose a tip portion of each rib.

2. The deboning device according to claim 1, wherein the blade portion provided in the cutting hand has a cylindrical shape with a inner blade portion of single blade or double blades at a rib tip portion thereof, and the blade portion is rotationally driven about a central axis of a cylindrical shape.

3. The deboning device according to any one of claims 1 to 2, further comprises a bone pulling arm provided on a robot arm which is three dimensionally controlled by a plurality of joints connected by different rotation axes, which bone pulling arm having a bone pulling hand that cuts off the meat at the outer periphery of the rib part by the head cutting hand and passes the wire along each rib of the block meat cut by the cutting hand so peels the rib from the block meat.

4. The deboning device according to any one of claims 1 to 3, wherein the blade portion provided in the cutting hand is a cylindrical or partially cylindrical portion having a single blade or double blades at a tip portion thereof, and the blade portion is arranged so as to move forward and backward in an axial direction.

5. The deboning device according to any one of claims 1 to 3, wherein the blade portion provided in the cutting hand is a cylindrical or partially cylindrical portion having a single blade or double blades at a tip portion thereof and the blade portion is arranged to swing at a predetermined angle.

6. The deboning device according to any one of claims 1 to 3, wherein the blade portion provided in the cutting hand has a cylindrical shape with a inner blade portion of single blade or double blades at a rib tip portion thereof, and the blade portion is rotationally driven about a central axis of a cylindrical shape.

7. The deboning device according to any one of claims 1 to 6, wherein the cutting hand has at least one cutting edge of single blade or double blades.

8. The deboning device according to any one of claims 1 to 6, wherein the cutting hand has at least one cutting edge of straight single blade or double blades.

9. The deboning device according to any one of claims 1 to 6, wherein the cutting hand has at least one cutting edge with a tip and the cutting edge has one or double blades.

10. The debone device according to any one of claims 1 to 9, wherein each of the cutting edge is driven to vibrate minutely.

11. The deboning device according to any one of claims 1 to 10, wherein two blades are provided on the creasing arm.

12. The deboning device according to any one of claims 1 to 11, wherein the distance of the two blades of the cutting arm are adjusted in accordance with the rib information detected by the rib detecting device.

13. The deboning device according to any one of claims 1 to 12, wherein the rib detecting device is constitued of an X-ray measuring device and a three dimensional measuring device, and the direction of the X-ray generator is set so that an irradiation direction of an X-ray from an X-ray generator of the X-ray measuring device is irradiated in an oblique direction different from a vertically downward direction.

14. The deboning device according to any one of claims 1 to 13, further comprises a wire hooking tongue which is driven to be interposed between the wire and the lower part of the rib so as to introduce the wire of the bone pulling arm below the rib.

15. The deboning device according to any one of claims 1 to 14, wherein each of the arms is connected to a plurality of robots which are three dimensionally controlled according to a processing time.

16. The deboning device according to ny one of claims 1 to 15, wherein at least one robot arm is provided and each of the robot arm carries out the processing.
